**Europäisches Patentamt**

**European Patent Office**

**Office européen des brevets**

(19)

(11) Numéro de publication : **0 551 290 B1**

(12)

# FASCICULE DE BREVET EUROPEEN

(45) Date de publication du fascicule du brevet :
27.07.94 Bulletin 94/30

(51) Int. Cl.⁵ : **G09B 29/00, G09B 27/08**

(21) Numéro de dépôt : **91915514.3**

(22) Date de dépôt : **16.09.91**

(86) Numéro de dépôt international :
**PCT/BE91/00065**

(87) Numéro de publication internationale :
**WO 92/06460 16.04.92 Gazette 92/09**

(54) **CARTE D'UN GLOBE.**

(30) Priorité : 02.10.90 BE 9000936

(43) Date de publication de la demande :
21.07.93 Bulletin 93/29

(45) Mention de la délivrance du brevet :
27.07.94 Bulletin 94/30

(84) Etats contractants désignés :
**BE CH DE ES FR GB LI LU NL**

(56) Documents cités :
**FR-A- 1 174 721**
**GB-A- 007 670**
**US-A- 2 932 907**
**US-A- 3 122 437**
**OFFICIAL GAZETTE 23 February 1904 US**
**PATENT OFFICE, WASHINGTON D.C ; US,**
**pages 2020-2021 & US A 752957 (COLAS J.V)**

(73) Titulaire : **VANHOUTTE, Guy**
**Hazeveld 2**
**B-1600 Oudenaken (BE)**

(72) Inventeur : **VANHOUTTE, Guy**
**Hazeveld 2**
**B-1600 Oudenaken (BE)**

(74) Mandataire : **Claeys, Pierre et al**
**GEVERS Patents,**
**Rue de Livourne 7,**
**Boîte Postale 1**
**B-1050 Bruxelles (BE)**

## Description

La présente invention est relative à une carte d'un globe, en particulier d'un astre, formé de deux hémisphères, comprenant un support de carte sur lequel les deux hémisphères sont représentés en projection.

On connaît des cartes de ce genre appelées planisphères. Par planisphères, il faut entendre des cartes représentant sur un même plan les deux hémisphères d'un astre ou les deux hémisphères célestes. La réalisation des planisphères nécessite une projection d'une surface sphérique sur un plan. Cette projection provoque, selon la méthode de projection utilisée, de fortes déformations angulaires, en particulier sur les parties marginales de la carte, et/ou un accroissement excessif des surfaces, en particulier dans les parties polaires de la carte.

On connaît aussi les globes terrestres qui reproduisent la carte de la terre à échelle réduite, sur une surface sphérique. De tels globes terrestres sont encombrants s'ils doivent permettre une lecture sans effort de la carte. D'autre part, ces globes ne permettent jamais qu'une vision partielle de la carte de la terre et ils obligent l'utilisateur soit à tourner autour du globe, soit à tourner celui-ci sur son axe, lorsque cela est prévu. Une vision globale de la carte de la terre n'est pas possible avec un globe terrestre.

La présente invention a pour but de réaliser une carte du globe du type cité au début, qui permette de pallier dans une grande mesure ces inconvénients. Cette carte du globe devra avantageusement offrir simultanément des caractéristiques visuelles agréables tout en permettant une vision globale de la terre. De préférence, la carte sera un objet aisé à manipuler, que l'on peut observer à distance, éventuellement en le suspendant à un mur.

Pour résoudre ces problèmes, il est prévu suivant l'invention une carte du type décrit au début, dans laquelle le support de carte est un segment d'ellipsoïde présentant une surface convexe externe sur laquelle a lieu la projection des deux hémisphères précitées.

De préférence, l'ellipsoïde précité est un ellipsoïde de révolution aplati, c'est-à-dire engendré par rotation d'une ellipse autour du petit axe de celle-ci.

Suivant une forme particulière de réalisation de l'invention, le segment d'ellipsoïde est engendré par un plan sécant qui est parallèle à l'axe de révolution et qui, en coupant l'ellipsoïde, forme une surface de coupe de contour elliptique. Avantageusement, la carte présente un bord correspondant au contour elliptique de la surface de coupe susdite. Ce contour forme de préférence une ellipse de 38°.

Suivant une forme avantageuse de réalisation de l'invention, la surface convexe du segment d'ellipsoïde est divisée en deux parties égales par une ligne équatoriale située dans un plan perpendiculaire à l'axe de révolution et les extrémités de cette ligne équatoriale sont inscrites dans un angle au centre de l'ellipsoïde égal ou inférieur à 180°, de préférence de 152°.

Suivant une forme préférée de réalisation de l'invention, au moins un des pôles est étiré en formant un segment de courbe d'une longueur égale à 0-20 %, de préférence à 15 %, de celle d'une ligne équatoriale divisant ladite surface convexe en deux dans un plan perpendiculaire à l'axe de révolution.

Suivant une forme particulière de réalisation de l'invention, un méridien central s'étendant dans un plan passant par l'axe de révolution divise la carte en deux parties égales et un méridien latéral passe au bord de la carte. Avantageusement, le méridien latéral et le méridien central ont entre eux une différence de longueur inférieure à 15 % de la longueur du méridien central; de préférence, cette différence est égale à environ 9 % de la longueur du méridien central.

Suivant une forme particulièrement avantageuse de réalisation de l'invention, au centre de la carte, à une distance de celui-ci égale à trois fois la longueur du grand axe du contour elliptique de la carte, les parallèles et le méridien central sont visuellement rectilignes.

Suivant une autre forme de réalisation de l'invention, la carte présente, entre 0° et 70° de latitude, une déformation angulaire au bord de la carte qui est inférieure à 25°, de préférence égale ou inférieure à 17°.

Très avantageusement, on peut prévoir suivant l'invention que le support de carte soit supporté sur un panneau plan à partir duquel fait saillie ladite surface convexe.

D'autres détails et particularités de l'invention ressortiront de la description donnée ci-après, à titre non limitatif et avec référence aux dessins annexés.

La figure 1 représente une vue en perspective d'un segment d'ellipsoïde destiné à servir de support pour une carte suivant l'invention.

La figure 2 représente une vue du dessus de la figure 1.

La figure 3 représente une vue de face d'une forme de réalisation de carte suivant l'invention.

La figure 4 représente une vue latérale de la carte illustrée sur la figure 3, dans le sens de la flèche A.

La figure 5 représente une vue du dessus de la carte illustrée sur la figure 3, dans le sens de la flèche B.

Sur les différents dessins, les éléments identiques ou analogues sont désignés par les mêmes références.

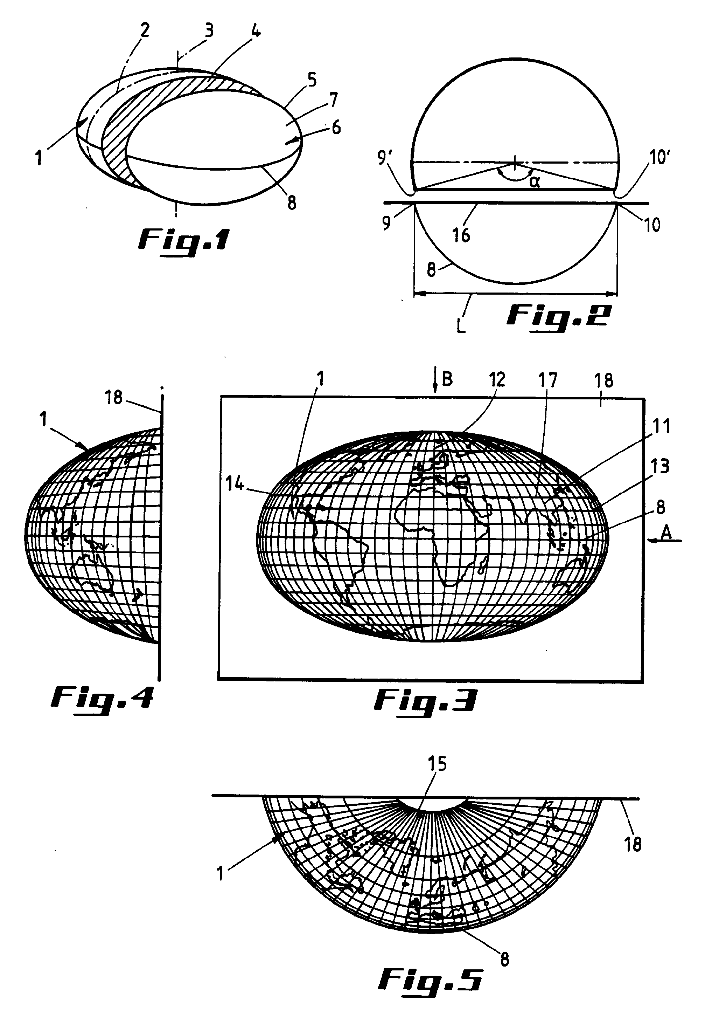

Sur la figure 1 on peut voir un ellipsoïde de révolution aplati 1, c'est-à-dire un volume engendré par la rotation d'une ellipse 2 autour de son petit axe 3. Sur la figure 1, un plan sécant, parallèle à l'axe de révolution 3, coupe l'ellipsoïde 1 en formant dans ce dernier une surface de coupe 4, représentée en hachurés. Cette surface de coupe a un bord de contour elliptique 5, et bien sûr également la base du segment d'ellipsoïde 6 détaché de l'ellipsoïde 1. Ce segment d'ellipsoïde 6 présente une surface externe convexe 7. Cette surface est divisée en deux parties égales par une ligne équatoriale courbe 8 qui est située dans un plan perpendiculaire à l'axe de révolution 3.

Un tel segment d'ellipsoïde forme ainsi un support tridimensionnel qui présente au moins une partie de surface convexe 7 sur laquelle peut avoir lieu une projection de deux hémisphères, par exemple des deux hémisphères d'un astre, comme la terre, la lune, etc....., ou même des deux hémisphères de la voûte céleste.

Dans l'exemple de réalisation illustré sur les figures 1 et 2, lorsque l'ellipsoïde 1 est coupé par le plan sécant, les extrémités 9 et 10 de la ligne équatoriale sont situées en 9′ et 10′. Ces points sont décalés l'un par rapport à l'autre d'un angle α au centre de l'ellipsoïde de 152°. La ligne équatoriale peut s'étendre à 180°. On obtient alors un demi-ellipsoïde qui annule toute déformation angulaire, mais qui ne permet pas de voir la carte dans sa totalité, sans un léger déplacement de l'observateur. La ligne équatoriale s'étendra donc sur un angle égal ou de préférence inférieur à 180°. L'angle de 152° s'est avéré très favorable pour permettre à la fois une vision globale sans déplacement de l'observateur et une déformation angulaire très réduite.

Dans l'exemple de réalisation illustré sur les figures 3 à 5, la carte représente les deux hémisphères de la terre avec pôle Nord et pôle Sud et elle comprend un support de carte sous la forme d'un segment d'ellipsoïde 6 tel qu'illustré sur les figures 1 et 2. La ligne équatoriale 8 est divisée en 36 parties égales, par lesquelles passent des méridiens 11 qui s'étendent chacun entre les deux pôles. Un méridien central courbe 12 s'étend dans un plan passant par l'axe de révolution 3 et il divise la carte en deux parties égales. Un méridien latéral 13 ou respectivement 14 passe le long du bord elliptique 5 (voir figure 1) de la carte.

Suivant l'invention, le méridien latéral 13 ou 14 et le méridien central 12 ont entre eux de préférence une différence de longueur inférieure à 15 % de la longueur du méridien central 12. Dans l'exemple de réalisation illustré sur les figures 3 à 5, cette différence de longueur est égale à 9 % de la longueur du méridien central 12.

Ainsi qu'il ressort de la figure 2, le grand axe 16 de l'ellipse formée par le plan sécant dans l'ellipsoïde a une longueur L. Lorsque l'observateur se place à une distance du centre de la carte égale à trois fois cette longueur L, non seulement la ligne équatoriale 8 et le méridien central 12 sont visuellement rectilignes, mais aussi tous les parallèles 17. Ce dernier effet est obtenu en particulier dans le cas où l'angle au centre α est égal à 152° et lorsque la différence de longueur entre les méridiens latéraux 13, 14 et le méridien central 12 est égale à 9 % de la longueur de ce dernier.

Cette impression de parallélisme est uniquement optique et elle est dûe principalement à un redressement permis par la vision stéréoscopique des yeux de l'être humain. Il en est de même de l'impression visuelle de réduction très légère des distances entre les parallèles, vers les pôles. En effet, en réalité, la plus grande dimension des méridiens latéraux par rapport au méridien central nécessite une courbure des parallèles vers les bords de la carte, vers le haut ou vers le bas selon l'hémisphère considéré. D'autre part, la distance réelle entre les parallèles augmente au contraire progressivement vers les pôles, du moins dans l'exemple de réalisation illustré. Si l'on considère la distance entre la ligne équatoriale et le parallèle à 10° de latitude comme égal à 1, on obtient :

| Latitude | Distance relative entre parallèles |
|----------|:----------------------------------:|
| 0° à 10° | 1,00 |
| 10° à 20° | 1,01 |
| 20° à 30° | 1,04 |
| 30° à 40° | 1,09 |
| 40° à 50° | 1,17 |
| 50° à 60° | 1,30 |
| 60° à 70° | 1,52 |
| 70° à 80° | 1,94 |
| 80° à 90° | 3,26 |

Cet agencement ressort particulièrement bien de la figure 5.

Dans l'exemple de réalisation illustré sur les figures 3 à 5, si l'on considère que la longueur de la ligne équatoriale est égale à 1, on a prévu l'échelle suivante de longueur des parallèles :

| Latitude en degrés | Longueur relative de parallèles |
|:---:|:---:|
| 0 | 1,00 |
| 10 | 0,99 |
| 20 | 0,96 |
| 30 | 0,92 |
| 40 | 0,86 |
| 50 | 0,79 |
| 60 | 0,70 |
| 70 | 0,58 |
| 80 | 0,42 |
| 90 | 0,15 |

Dans cet exemple de réalisation, les pôles ne sont donc que très légèrement étirés. Ainsi qu'il ressort en particulier de la figure 5, le pôle Nord forme un segment de courbe 15 dont la longueur est égale à 15 % de celle de la ligne équatoriale 8.

Il est possible suivant l'invention, et en particulier lorsque le support de carte est un demi-ellipsoïde, de représenter les pôles par un point. On peut par ailleurs imaginer une extension des pôles plus grande que celle de 15 %, par exemple de 20 %.

Dans l'exemple de réalisation illustré sur les figures 3 à 5, la carte présente à la latitude de 70°, au bord de la carte, une déformation angulaire qui est de 17°. De préférence, cette déformation angulaire sera inférieure à 25°.

Ainsi qu'il ressort en particulier des figures 3 à 5, le support de carte en forme de segment d'ellipsoïde 6 est lui-même supporté sur un panneau plan 18, qui peut éventuellement être accroché à un mur ou à une paroi quelconque.

La carte suivant l'invention, dont une forme de réalisation vient d'être décrite ci-dessus, présente ainsi une projection spécifique sur la surface convexe d'un autre volume, en permettant à la fois une vue globale de la surface de projection et une convexité maximale qui limite au mieux les déformations de la projection.

Il est en effet impossible d'obtenir à l'aide d'un planisphère à la fois des pôles peu ou pas étirés, une différence de l'ordre de seulement 9 % entre la longueur des méridiens et une déformation angulaire réduite à moins de 17°, entre l'équateur et 70° de latitude, au bord de la carte.

La carte suivant l'invention combine un bon degré de conformité avec un accroissement réduit des surfaces.

La carte suivant l'invention offre en outre des caractéristiques visuelles inédites. Elle permet une vision totale du globe avec le même effet de volume, en mettant en évidence les relations entre la zone équatoriale, les régions polaires et les zones intermédiaires. La forme de la carte améliore automatiquement le rapport de surfaces. Les masses continentales, bien que légèrement déformées par la projection, sont visuellement plus équilibrées (par exemple sur un planisphère avec projection de Mercator la surface du Groeland est aussi grande que celle de l'Afrique). Ces effets visuels permis par la carte suivant l'invention sont dus à la perspective (angles de vue différents sur une surface convexe) et ils ne sont pas vraiment ressentis par le spectateur comme des déformations, et cela grâce à la vision stéréoscopique de l'être humain, à la mobilité de ses yeux et à la perception de relief du cerveau. Par contre, sur des planisphères traditionnels, c'est-à-dire à surface plane, les déformations présentes sont sans interprétation possible. Cette dernière différence existe aussi entre la vision réelle de la carte suivant l'invention et sa représentation photographique ou par dessin sur plan, comme sur les figures annexées. Celles-ci sont dans l'incapacité de rendre cet effet visuel de redressement automatique des déformations par le spectateur.

En vision rapprochée, la zone d'observation est bien entendu plus réduite et elle se voit toujours sensiblement perpendiculairement à la surface, comme sur un globe terrestre par exemple. La surface convexe de la carte permet une réduction importante des altérations angulaires, surtout en bordure du champ. Le contour des continents, des états, etc.... qui sont représentés est plus conforme à la réalité.

Il est évident que la présente invention n'est en aucune façon limitée à la forme de réalisation décrite ci-dessus et que bien des modifications peuvent y être apportées sans sortir de son cadre.

Il faut remarquer que, dans la présente invention, il faut entendre par ellipsoïde, non seulement des ellipsoïdes réguliers mais aussi des formes irrégulières, telles que des ovoïdes ou encore des formes limites comme des sphéroïdes.

La surface convexe portant la carte se prête à plusieurs types de projection selon l'approche mathématique du cartographe.

L'utilisation de couleurs est bien entendu possible et le support de carte suivant l'invention est idéal pour des cartes thématiques, comme celles illustrant la météorologie, le climat, la végétation, etc....

Une telle carte en forme de segment d'ellipsoïde peut être fabriquée par n'importe quel procédé approprié. On imagine par exemple sa réalisation en métal par emboutissage ou en matière plastique par thermoformage. Une mise en relief des continents et chaînes montagneuses peut très bien s'imaginer dans le cadre du procédé de fabrication.

Il faut noter, comme avantage supplémentaire, que la carte suivant l'invention permet la fabrication, par un procédé holographique, d'un planisphère présentant à son tour à la fois un effet tridimensionnel et une vision globale des deux hémisphères.

## Revendications

1. Carte d'un globe, en particulier d'un astre, formé de deux hémisphères, comprenant un support de carte sur lequel les deux hémisphères sont représentés en projection,
caractérisée en ce que le support de carte est un segment (6) d'éllipsoïde (1) présentant une surface convexe externe (7) sur laquelle a lieu la projection des deux hémisphères précités.

2. Carte suivant la revendication 1, caractérisée en ce que l'ellipsoïde (1) précité est un ellipsoïde de révolution aplati, c'est-à-dire engendré par rotation d'une ellipse (2) autour du petit axe (3) de celle-ci.

3. Carte suivant la revendication 2, caractérisée en ce que le segment d'ellipsoïde (6) est engendré par un plan sécant qui est parallèle à l'axe de révolution (3) et qui, en coupant l'ellipsoïde (1), forme une surface de coupe (4) de contour elliptique.

4. Carte suivant la revendication 3, caractérisée en ce qu'elle présente un bord (5) correspondant au contour elliptique de la surface de coupe (4) susdite.

5. Carte suivant l'une ou l'autre des revendications 3 et 4, caractérisée en ce que ledit bord (5) forme une ellipse de 38°.

6. Carte suivant l'une des revendications 2 à 5, caractériée en ce que la surface convexe (7) du segment d'ellipsoïde (6) est divisée en deux parties égales par une ligne équatoriale (8) courbe située dans un plan perpendiculaire à l'axe de révolution (3) et en ce que les extrémités (9, 10 et respectivement 9', 10') de cette ligne équatoriale (8) sont inscrites dans un angle au centre ($\alpha$) de l'ellipsoïde (1) égal ou inférieur à 180°.

7. Carte suivant la revendication 6, caractérisée en ce que les extrémités (9, 10 et respectivement 9', 10') de la ligne équatoriale (8) susdite sont inscrites dans un angle au centre ($\alpha$) de l'ellipsoïde (1) de 152°.

8. Carte suivant l'une quelconque des revendications 2 à 7, présentant des pôles Nord et/ou Sud, caractérisée en ce qu'au moins un des pôles est étiré en formant un segment de courbe (15) d'une longueur égale à 0-20 %, de préférence à 15 %, de celle d'une ligne équatoriale (8) divisant ladite surface convexe en deux dans un plan perpendiculaire à l'axe de révolution (3).

9. Carte suivant l'une quelconque des revendications 4 à 8, présentant des parallèles (17) et des méridiens (11), caractérisée en ce qu'un méridien central (12) courbe s'étendant dans un plan passant par l'axe de révolution (3) divise la carte en deux parties égales et en ce qu'un méridien latéral (13, 14) passe au bord (5) de la carte.

10. Carte suivant la revendication 9, caractérisée en ce que le méridien latéral (13, 14) et le méridien central ont entre eux une différence de longueur inférieure à 15 % de la longueur du méridien central (12).

11. Carte suivant la revendication 10, caractérisée en ce que le méridien latéral (13, 14) et le méridien central ont entre eux une différence de longueur égale à environ 9 % de la longueur du méridien central.

12. Carte suivant l'une quelconque des revendications 9 à 11, caractérisée en ce que la surface de coupe (4) de contour elliptique présente un grand axe (16) et un petit axe et en ce que, au centre de la carte, à une distance de celui-ci égale à trois fois la longueur dudit grand axe (16), les parallèles (17) et le méridien central (12) sont visuellement rectilignes.

13. Carte suivant l'une quelconque des revendications 9 à 12, caractérisée en ce qu'elle présente, entre 0° et 70° de latitude, une déformation angulaire, au bord (5) de la carte, qui est inférieure à 25°.

14. Carte suivant la revendication 13, caractérisée en ce que ladite déformation angulaire est égale ou inférieure à 17°.

15. Carte suivant l'une quelconque des revendications 1 à 14, caractérisée en ce que le support de carte tridimensionnel est supporté sur un panneau plan, à partir duquel fait saillie ladite surface convexe (7).

**Patentansprüche**

1. Karte eines Globus, insbesondere eines Gestirns, gebildet aus zwei Hemisphären, enthaltend einen Kartenträger, auf dem die zwei Hemisphären in Projektion dargestellt sind, **dadurch gekennzeichnet**, daß der Kartenträger ein Segment (6) eines Ellipsoids (1) ist und eine äußere konvexe Oberfläche aufweist, auf welcher die Projektion der beiden vorgenannten Hemisphären angeordnet ist.

2. Karte nach Anspruch 1, **dadurch gekennzeichnet**, daß der vorgenannte Ellipsoid ein abgeflachter Rotationsellipsoid, d.h. durch Rotation einer Ellipse (2) um dessen kleine Achse (2) erzeugt ist.

3. Karte nach Anspruch 2, **dadurch gekennzeichnet,** daß das Ellipsoidsegment (6) gebildet ist durch eine schneidende Ebene, die parallel zur Rotationsachse (3) liegt und die, unter Schneiden des Ellipsoids (1) eine Schnittfläche (4) mit elliptischem Umriß bildet.

4. Karte nach Anspruch 3, **dadurch gekennzeichnet**, daß sie einen Rand (5) aufweist, der der elliptischen Kontur der oben genannten Schnittfläche entspricht.

5. Karte nach einem der Ansprüche 3 und 4, **dadurch gekennzeichnet**, daß der Rand (5) eine Ellipse von 38° bildet.

6. Karte nach einem der Ansprüche 2 bis 5, **dadurch gekennzeichnet**, daß die konvexe Oberfläche (7) des Ellipsoidsegments (6) durch eine gekrümmte äquatoriale Linie (8) in zwei gleiche Teile unterteilt ist, die in einer senkrechten Ebene zur Rotationsachse (3) liegt, und wobei die äußeren Enden (9, 10 bzw. 9′, 10′) dieser äquatorialen Linie im Zentrum des Ellipsoids (1) einen Winkel α gleich oder kleiner 180° beschreiben.

7. Karte nach Anspruch 6, **dadurch gekennzeichnet,** daß die äußeren Enden (9, 10 bzw. 9′, 10′) der Äquatoriallinie (8) im Zentrum des Ellipsoids einen Winkel α von 152° beschreiben.

8. Karte nach irgendeinem der Ansprüche 2 bis 7, enthaltend Nord- und/oder Südpole, **dadurch gekennzeichnet,** daß mindestens einer der Pole gestreckt ist, unter Bildung eines Kurvenabschnitts (15) mit einer Länge gleich 0-20 %, vorzugsweise gleich 15 %, einer äquatorialen Linie (8), die die genannte konvexe Oberfläche in einer senkrechten Ebene zur Rotationsachse zweiteilt.

9. Karte nach irgendeinem der Ansprüche 4 bis 8 mit Breitenkreisen (17) und Meridianen (11), **dadurch gekennzeichnet,** daß ein zentraler Meridian (12), der sich in einer Ebene erstreckt, die durch die Rotationsachse (3) verläuft, die Karte in zwei gleich große Teile unterteilt, und daß ein seitlicher Meridian (13, 14) am Rand (5) der Karte verläuft.

10. Karte nach Anspruch 9, **dadurch gekennzeichnet,** daß der seitliche Meridian (13, 14) und der zentrale Meridian zueinander eine Längendifferenz kleiner 15 % von der Länge des Zentralmeridianes aufweisen.

11. Karte nach Anspruch 10, **dadurch gekennzeichnet,** daß der seitliche Meridian (13, 14) und der zentrale Meridian eine Längendifferenz gleich etwa 9 % der Länge des zentralen Meridianes besitzen.

12. Karte nach irgendeinem der Ansprüche 9 bis 11, **dadurch gekennzeichnet,** daß die Oberfläche des eine elliptische Kontur aufweisenden Schnittes (4) eine große Achse (16) und eine kleine Achse besitzt, wobei im Zentrum der Karte, in einem Abstand davon gleich dem Dreifachen der Länge der großen Achse (16), die Breitenkreise (17) und der zentrale Meridian (12) optisch gerade Linien sind.

13. Karte nach irgendeinem der Ansprüche 9 bis 12, **dadurch gekennzeichnet,** daß sie zwischen 0° und 70° Breite am Kartenrand eine Winkeldeformation aufweist, die kleiner 25° ist.

14. Karte nach Anspruch 13, **dadurch gekennzeichnet,** daß die genannte Winkeldeformation gleich oder kleiner 17° ist.

15. Karte nach irgendeinem der Ansprüche 1 bis 14, **dadurch gekennzeichnet,** daß der Träger der dreidimensionalen Karte abgestützt ist auf einer ebenen Platte, von welcher die genannte konvexe Oberfläche entspringt.

## Claims

1. A map of a globe, in particular of a celestial body, formed by two hemispheres, comprising a map support on which the two hemispheres are represented in projection, characterised in that the map support is a segment (6) of an ellipsoid (1) having an outer convex surface (7) on which said two hemispheres have been projected.

2. A map according to Claim 1, characterised in that said ellipsoid (1) is a flattened ellipsoid of revolution, i.e. generated by rotation of an ellipse (2) about the minor axis (3) thereof.

3. A map according to Claim 2, characterised in that the ellipsoid segment (6) is generated by a secant plane which is parallel to the axis of revolution (3) and which, by intersecting the ellipsoid (1), forms a sectional surface (4) of elliptical contour.

4. A map according to Claim 3, characterised in that it has an edge (5) corresponding to the elliptical contour of said sectional surface (4).

5. A map according to either one of Claims 3 or 4, characterised in that said edge (5) forms an ellipse of 38°.

6. A map according to any one of Claims 2 to 5, characterised in that the convex surface (7) of the ellipsoid segment (6) is divided into two equal portions by a curved equatorial line (8) situated on a plane perpendicular to the axis of revolution (3), and in that the extremities (9, 10 and 9′, 10′ respectively) of this equatorial line (8) are inscribed at an angle to the centre ($\alpha$) of the ellipsoid (1) which is equal to or less than 180°.

7. A map according to Claim 6, characterised in that the extremities (9, 10 and 9′, 10′ respectively) of said equatorial line (8) are inscribed at angle to the centre ($\alpha$) of the ellipsoid (1) of 152°.

8. A map according to any one of Claims 2 to 7, having north and/or south poles, characterised in that at least one of the poles is stretched to form a curve segment (15) of a length equal to 0-20 %, preferably to 15 %, of that of an equatorial line (8) dividing said convex surface into two on a plane perpendicular to the axis of revolution (3).

9. A map according to any one of Claims 4 to 8, having parallels (17) and meridians (11), characterised in that a curved central meridian (12) extending on a plane passing through the axis of revolution (3) divides the map into two equal portions, and in that a lateral meridian (13, 14) passes along the edge (5) of the map.

10. A map according to Claim 9, characterised in that the lateral meridian (13, 14) and the central meridian have between them a difference in length of less than 15 % of the length of the central meridian (12).

11. A map according to Claim 10, characterised in that the lateral meridian (13, 14) and the central meridian have between them a difference in length equal to approximately 9 % of the length of the central meridian.

12. A map according to any one of Claims 9 to 11, characterised in that the sectional surface (4) of elliptical contour has a major axis (16) and a minor axis, and in that, in the centre of the map, at a distance therefrom equal to three times the length of said major axis (16), the parallels (17) and the central meridian (12) are visually straight.

13. A map according to any one of Claims 9 to 12, characterised in that, between 0° and 70° of latitude, it has an angular deformation at the edge (5) of the map which is less than 25°.

14. A map according to Claim 13, characterised in that said angular deformation is equal to or less than 17°.

15. A map according to any one of Claims 1 to 14, characterised in that the three-dimensional map support is supported on a flat panel, from which said convex surface (7) projects.

Fig.1

Fig.2

Fig.4

Fig.3

Fig.5